# EUROPEAN PATENT SPECIFICATION

(11) **EP 1 604 485 B1**
(45) Date of publication and mention of the grant of the patent: **05.10.2011**
(21) Application number: 04757791.1
(22) Date of filing: 18.03.2004
(51) Int. Cl.: H04W 12/06, H04L 12/22

(54) **SYSTEM AND METHOD FOR MOBILE TRANSACTIONS USING THE BEARER INDEPENDENT PROTOCOL**
SYSTEM UND VERFAHREN FÜR MOBILTRANSAKTIONEN UNTER VERWENDUNG EINES TRÄGERUNABHÄNGIGEN PROTOKOLLS
SYSTEME ET PROCEDE DE TRANSACTIONS MOBILES A L'AIDE DU PROTOCOLE INDEPENDANT DU SUPPORT

(30) Priority: 19.03.2003 US 455761 P
(43) Date of publication of application: 14.12.2005
(73) Proprietor: VeriFone, Inc., San Jose CA 95110 (US); Goldthwaite, Scott, Hingham, MA 02043 (US); Petrov, Andrew A., Princeton, NJ 08540 (US); Doudkine, Andrei, Woburn, MA 01801 (US)
(72) Inventor: GOLDTHWAITE, Scott, Hingham, MA 02043 (US); PETROV, Andrew, A., Princeton, NJ 08540 (US); DOUDKINE, Andrei c/o Way Systems, Inc., Woburn, MA 01801 (US); BENSON, Keith, Reston Virginia 20190 (US)
(74) Representative: Schaeberle, Steffen
(86) International application number: PCT/US2004/008228
(87) International publication number: WO 2004/086676

(56) References cited:
- WO-A-01/43472
- WO-A-01/99448
- WO-A-02/25893
- WO-A-02/089449
- WO-A-03/017125
- US-A- 6 075 860
- US-A1- 2002 098 830
- US-A1- 2002 120 857
- US-A1- 2002 126 845
- US-A1- 2002 128 036
- US-A1- 2002 159 600
- US-A1- 2002 165 008
- US-A1- 2003 051 041
- "Digital cellular telecommunications system (Phase 2+); Specification of the SIM Application Toolkit for the Subscriber Identity Module - Mobile Equipment (SIM-ME) interface (3GPP TS 11.14 version 8.12.0 Release 1999); ETSI TS 101 267" ETSI STANDARDS, LIS, SOPHIA ANTIPOLIS CEDEX, FRANCE, vol. 3-T3;SMG9, no. V8.12.0, 1 December 2002 (2002-12-01), XP014015928 ISSN: 0000-0001

## Description

### Field of the Invention

The present invention relates to a system and a method for performing transactions between a mobile device and a remote server utilizing the Bearer Independent Protocol commands.

The preamble parts of independent claims are known from e.g. WO 01/99448 A1.

### Background of the Invention

Mobile phones, originally designed for voice communication, are now extensively utilized for data transmission.

The Short Message Service (SMS) protocol is the most widely used form of sending text messages between mobile phone users. SMS is also utilized for data communication between a server and a mobile phone. For example, in a simple "server-to-mobile" system, a server sends a mobile phone user an SMS message to notify him that he has voice mail or to send him information updates, i.e., news, weather and sports updates. More complex SMS applications enable the mobile phone user to send an SMS message to a designated server to request a stock quote, perform an inventory lookup or process a credit card transaction. SMS is a "store and forward" messaging protocol that ensures that a message reaches its intended destination. While this protocol is appropriate for sending text messages between two mobile phone users, it is not well suited for sending data and performing financial transactions between a mobile device and a host system for the following reasons.

The European Telecommunications Standards Institute (ETSI) SMS specification (3GPP TS 23.040) defines the technical size limitation of an SMS message as 140 bytes. As a result, if the data transmission requires a larger size message, an application on the mobile device and the server must split up the message into smaller sizes and reassemble messages in the proper order.

SMS messages have no context of a session, i.e., each SMS message is a distinct event. As a result, if a transaction requires multiple steps and therefore multiple SMS messages are needed to complete the transaction, the mobile device and server application must keep track of the transaction as it progresses through the various steps required to complete the transaction.

Although SMS data can be encrypted "over the air" within a mobile operator's network, there is no specification for SMS data encryption once the message is transmitted beyond the mobile operator's network. For example, if the destination of the SMS message is a server inside a banking or enterprise network which is outside the mobile operator's network, the data will be unencrypted and vulnerable to interception by other unauthorized parties. As a result, the mobile device and server application must implement their own encryption method to ensure that the data in the SMS message are encrypted between the two endpoints.

The "store and forward" nature of SMS provides reliability in getting a message transmitted. However, this also results in time delays between sender and recipient. This message latency is unpredictable and not suitable for conducting transactions where timing is important. For example, in financial transactions where customers and merchants expect instantaneous data transmission for payment authorization transactions, SMS message transmission that can average between 5 seconds to 60 seconds is not acceptable.

The implementation of packet-switch networks such as General Packet Radio Service (GPRS), DataTac, Mobitex provides an "always on" connection for data transmission that solves many of the problems associated with SMS data transmissions for transaction processing. GPRS also provides a direct gateway to the Internet, thereby enabling a mobile transaction system to directly interface between a mobile device and a server without utilizing SMS. Mobile devices can utilize GPRS networks in several ways:
The mobile device can be directly connected to a computer using a serial cable, infrared or Bluetooth connection. When connected to the computer, the mobile device acts like a typical modem and an application on the computer can utilize Asynchronous Transfer Mode (ATM) commands to control the mobile device's connection to the GPRS network and establish a connection to the Internet. Once connected to the Internet, the computer can act as either a host/server or a client to create a mobile transaction processing system.

The mobile device can also directly utilize a GPRS connection using a built-in or web/WAP browser to connect to a server application. Alternatively, the mobile device may enable developers to develop and deploy an application directly on the mobile device's operating system.

On mobile devices that utilize a Subscriber Identification Card (SIM) card, applications on the SIM card can access control the GPRS connection utilizing SIM Toolkit (STK) commands as defined in the ETSI specification, ETSI TS 101 267 (3GPP TS 11.14). Using this connection, a web/WAP browser or an application on the SIM card can access data on a server and perform secure transaction processing.

Each of these methods enables a mobile financial transaction processing system depending on the type of application. The SIM card method is a more flexible solution because the SIM card can be placed into any mobile device that meets the 3GPP TS 11.14 (class e) specifications and the application will work the same way on any of these devices, whereas the other methods require custom programming for each type of mobile device. Although the SIM card approach provides greater flexibility, this approach is also more complex to develop because the SIM card is issued by the mobile network operator and only the mobile network operator can allow applications to be developed and deployed on the SIM card. As a result third party developers are not able to deploy applications without cooperating with the mobile network operator. Accordingly, there is a need for a system that allows third party developers to develop and deploy applications on the SIM card without the need for approval from the mobile network operator. Furthermore, the system needs to be able to transmit and receive data utilizing a standard communication protocol that will work the same way on any mobile device without the need for customization.

International patent application WO 03/017125 A1 describes a converged network that is accessed by client terminals. The converged network includes a wide area network (WAN), a local area network (LAN) and a gateway linked to the wide area and local area networks. The gateway integrates billing and authentication functions of the wide area and local area networks.

International application WO 02/089449 A2 describes a communication system comprising first and second communication devices capable of communicating with a telecommunication network. The first communication device comprises identification information and the second communication device is capable of remotely acquiring at least some of the identification information of the first communication device. The second communication device is further capable of acquiring connection parameters from the first communication device and applying the acquired parameters to effect a connection to the network.

International application WO 01/43472 A1 describes a method and a system for interchanging information safely between a user and a SIM Application Toolkit application in a telecommunication system comprising a terminal device, connected to a telecommunication network, a smart card inserted into the terminal device, a WAP client program and a SIM Application Toolkit (STK) arranged in the terminal device and/or the smart card and a first application which is part of the WAP client program. The terminal device comprises the necessary features for using the WAP. As part of the WAP client program, a second application is added to start and control the SIM Application Toolkit applications. The first application calls the second application when wishing to use SIM Application Toolkit applications. The second application controls and manages the SIM Application Toolkit applications and the interchange of information between the user of the terminal device and the SIM Application Toolkit applications.

International application WO 01/99448 A1 describes a method for processing and transmitting digital data on a mobile telephone network, in particular GSM, and more particularly for SIM toolkit applications, recorded on a SIM smart card of a mobile equipment. The method is characterized in that so-called master applications are transported on a distant server with which the mobile equipment communicates. These applications communicate with the SIM smart card, via the mobile equipment circuits and first and second types of SIM Toolkit applications, called reporters and slave respectively. The invention also concerns an onboard microchip system, in particular a SIM smart card.

International application WO 02/25893 A2 describes a system and method for facilitating information interexchange between a wireless telecommunications system having at least one telecommunications device therein and an information service provider. A Business-to-Business (B2B) engine is connected to the telecommunications system for receiving realtime information related to a telecommunications device within the telecommunictions system. This realtime information is provided by the B2B engine to the information service provider, which consequently provides content data to the telecommunications device within the telecommunications system.

None of the abovementioned prior art systems allows third party developers to develop and deploy applications on the SIM card without the approval from the mobile network operator. Furthermore, these prior art system are not able to transmit and receive data utilizing a standard communication protocol that will work the same way on any mobile device without the need for customization.

### Summary of the Invention

In general, one aspect of the invention provides a system for performing mobile transactions that includes a mobile communication device connected to a server device via a first network. The mobile communication device includes a subscriber identification module (SIM) card slot and a virtual subscriber identification (VSIM) interface connected to the SIM card slot and it is characterized by comprising means that provide subscriber identity authentication to the server device via the VSIM interface. The mobile communication device is further characterized by comprising a mobile transaction client application for managing communications between the mobile communication device and the server device. The mobile transaction client application is further characterized by comprising means that manage the communication between the mobile device and the server device by utilizing SIM Application Toolkit (STK) commands to invoke the Bearer Independent Protocol described in the European Telecommunications Standards Institute document ETSI TS 101 267, V8.12.0 (3GPP TS 11.14).

Implementations of this aspect of the invention include the following. The server device may further include a mobile transaction server application for managing the communication between the server and the mobile communication device. The VSIM interface may be located within the mobile communication device or within an attachment device. The attachment device may be connected to the mobile communication device via the SIM card slot and may further include one or more additional SIM slots, at least a second SIM card connected to one of the one or more additional SIM slots and a card reader. The card reader may be a smart card reader, a magnetic stripe card reader or a contactless smart card reader. The mobile communications device may be a mobile phone, a personal digital assistant, a pager, a wireless laptop computer, a personal computer, a television remote control or combinations thereof. The first network may be a wireless telecommunications network, a wireless wide area network (WWAN), a wireless local area network (WLAN), a wireless private network, or a wireless personal area network (PAN). The wireless telecommunications network may be a Global System for Mobile Communications (GSM), a Code Division Multiple Access (CDMA), CDMA 2000, wideband CDMA (WCDMA), Time Division Multiple Access (TDMA), General Packet Radio Service (GPRS), Third Generation (3G), Enhanced Data GSM Environment (EDGE), Mobitex or DataTac. The first network may also be infrared, serial line or Bluetooth. The first network may connect to a second network through a mobile operator gate and the server may connect to the second network thereby connecting to the first network and the mobile communication device. The second network may be the Internet, a wireless network, a wired network, a telecommunications network, a local area network (LAN), a WWAN, WLAN, or a personal area network (PAN). The communication may have a format such as Short Message Service (SMS), Transmission Control Protocol/Internet Protocol (TCP/IP), User Datagram Protocol (UPD), Simple Mail Transmission Protocol (SMTP), Simple Network Management Protocol (SNMP), or a proprietary message format. The server device may be further connected to other server devices via the second network. The mobile transactions may be financial transactions, information exchange or digital goods exchange. The server device may be a server computer, a personal computer, a second mobile communication device, a printer, or another communication device. The mobile communication device may further include a memory, a Central Processing Unit (CPU) and a first SIM card connected to the SIM card slot where the first SIM card authenticates the mobile communication device to the first network. The mobile communications device may further include other interfaces connected to the CPU. These other interfaces may be smart card interfaces, infrared transceiver interfaces, serial communication interfaces, or magnetic stripe reader interfaces. The mobile transaction client application may be stored in the VSIM interface, the CPU, the second SIM card, an external SIM card, a contactless smart card, a magnetic stripe card, or an external card.

In general in another aspect the invention provides a method for performing mobile transactions characterized by the following steps. First providing a mobile communication device having a subscriber identification module (SIM) card slot and a virtual subscriber identification (VSIM) interface connected to the SIM card slot. Next, providing a server device and connecting the mobile communication device to the server device via a first network. Next, providing subscriber identity authentication of the mobile communication device to the server device via the VSIM interface and communicating between the mobile communication device and the server device for performing mobile transactions. The mobile communication device further includes a mobile transaction client application for managing the communication between the mobile communication device and the server device. The mobile transaction client application manages the communication between the mobile device and the server device by utilizing SIM Application Toolkit (STK) commands to invoke the Bearer Independent Protocol described in the European Telecommunications Standards Institute document ETSI TS 101 267 V8.12.0 (3GPP TS 11.14).

Among the advantages of this invention may be one or more of the following. This invention provides an alternative and convenient way to develop and deploy mobile transaction processing systems. The advantage of using a mobile device attachment to interface with the mobile device at the SIM slot is application portability. The SIM Toolkit (STK) interface supported by the mobile device is a standard that is implemented identically on any mobile device that supports the standard. Therefore, any mobile transaction system that utilizes the STK specification will work on any mobile device that supports the standard regardless of the mobile device's hardware, software or firmware. Additionally, the approach of utilizing a VSIM interface enables the mobile device to access customized applications when the mobile device may otherwise be unable to be programmed with custom applications.

### Brief Description of the Drawings

FIG. 1 is schematic diagram of a mobile transaction system according to this invention;
FIG. 2 is a block diagram of the system architecture the mobile transaction system of FIG. 1;
FIG. 3 is another embodiment of the mobile transaction system according to this invention;
FIG. 4A is the ETSI specification for the Bearer Independent Protocol supported proactive commands;
FIG. 4B is the ETSI specification for the Bearer Independent Protocol supported bearers;
FIG. 4C is the ETSI specification for the Bearer Independent Protocol supported transport interfaces; and
FIG. 5 illustrates a circuitry for a mobile device attachment that adds multiple smart cards to a mobile device via a connection to the SIM slot on the mobile device.

### Detailed Description of the Invention

The present invention describes a system and method for processing mobile transactions. The system includes one or more mobile devices exchanging data with one or more remote servers or devices. The system utilizes a SIM Application Toolkit (STK) commands in order to establish a communication link between the one or more mobile devices and the one or more remote servers or devices.

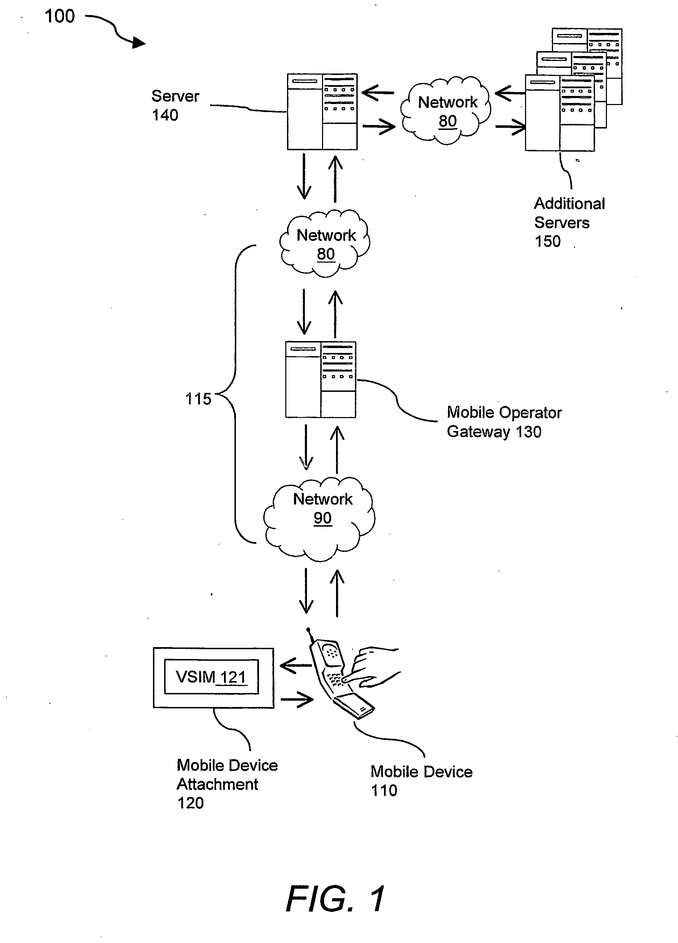

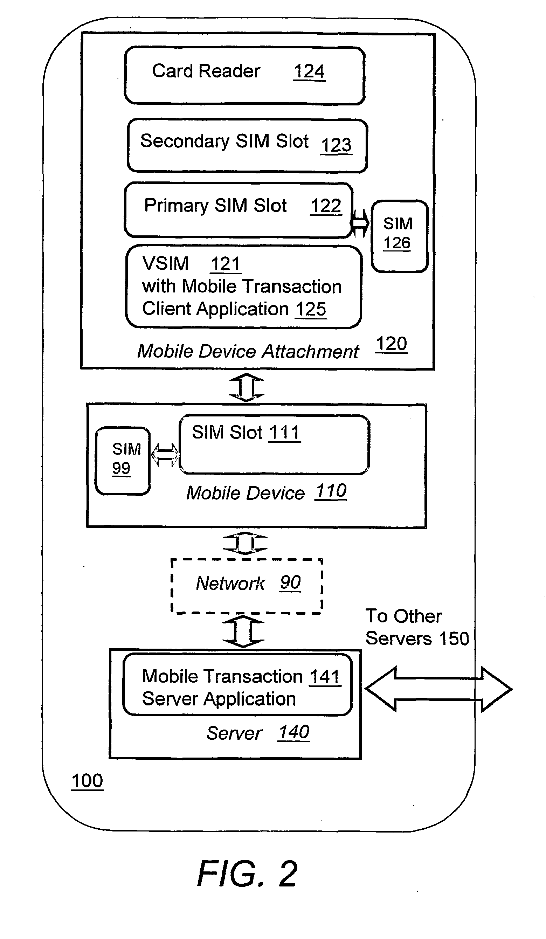

Referring to FIG 1 and FIG 2, a mobile transaction system 100 includes a mobile device 110, a mobile device attachment 120, a server 140 and additional servers 150. The mobile device 110 accesses the server 140 via a network connection 115 that includes a first network 90, a mobile operator gateway 130, and a second network 80. The mobile device 110 includes a Subscriber Identification Module (SIM) card 99 and a SIM slot 111. The mobile device attachment 120 connects to the mobile device 110 by attaching to the mobile device SIM slot 111.

Referring to FIG. 2, the mobile device attachment 120 includes a Virtual Subscriber Identification Module (VSIM) interface 121, a primary SIM slot 122, a secondary SIM slot 123, a card reader 124 and a SIM 126 placed in the primary SIM slot 122. The VSIM 121 includes a mobile transaction client application 125 that manages the interaction between the mobile device 110, the SIM 126 and a plurality of Smart Cards attached to SIM slots 122, 123 or to the card reader 124. The mobile transaction client application 125 utilizes the Bearer Independent Protocol (BIP) to open a communication channel to the mobile device 110 and to transmit and receive data to server 140. In this embodiment the mobile transaction client application 125 resides within VSIM 121. In other embodiments the mobile transaction client application 125 may reside within any of the smart cards attached to slots 122, 123 or within an external smart card that can be accessed via the card reader 124. Server 140 includes a mobile transaction server application 141 that transmits and receives data to and from the mobile transaction client application 125, respectively, using the communication channel established by the mobile transaction client application 125. The data that are transmitted between the mobile transaction client application 125 and mobile transaction server application 141 may be encrypted. In one example, the card reader 124 is a full-size ISO 78.16 smart card reader. In other examples, the card reader 124 is a contactless card reader or a magnetic stripe card reader, as described in the co-pending patent applications entitled "Mobile Device Equipped with a Contactless Smart Card Reader", and "Mobile Communication Device Equipped with a Magnetic Stripe Reader", respectively, the entire contents of which are incorporated herein by reference.

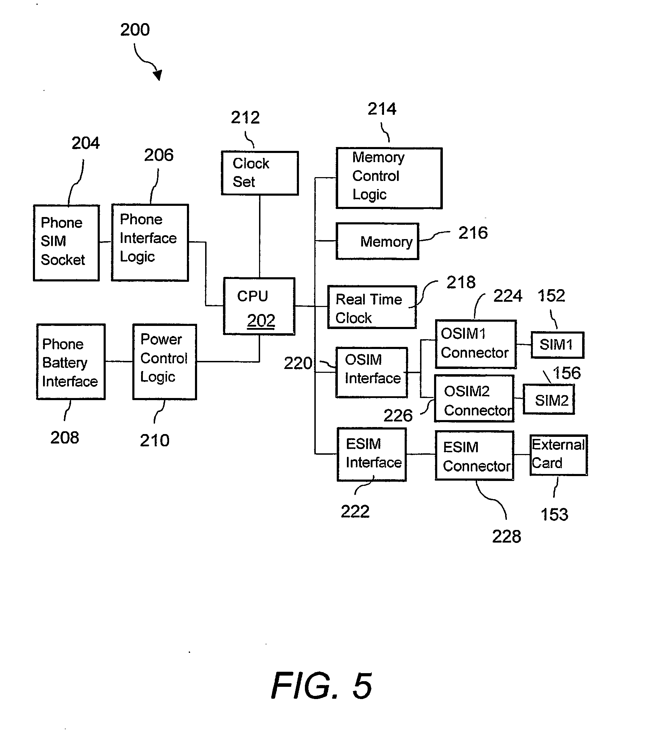

The SIM card 99 is issued by the mobile network operator and usually only the mobile network operator controls the development and deployment of applications on the SIM card 99. Third party application developers need to cooperate with the mobile network operator in order to develop and deploy applications on the SIM card 99. To alleviate the problem of developing SIM applications without obtaining cooperation from the mobile network operator or SIM card issuer, the invention described in PCT application WO 99/66752 entitled "Communication Method and Apparatus Improvement", the entire content of which is incorporated herein by reference, describes an attachment that connects to a mobile device SIM slot and provides an interface to the mobile device. Referring to FIG. 5, a schematic block diagram of the mobile device circuitry 200 includes a central processing unit (CPU) 202, which is connected through a phone interface logic arrangement 206 to a phone Subscriber Identification Module (SIM) socket 204. The CPU 202 has a clock arrangement 212 and power controller logic 210, which connects, to a phone battery interface 208. The CPU 202 has a memory 216, memory control logic 214, and a real time clock 218. The CPU 202 is also connected to an original subscriber identification module (OSIM) interface 220, and an external subscriber identification module (ESIM) interface 222. The OSIM interface 220 includes a first OSIM1 connector 224 and a second OSIM2 connector 226. OSIM1 connector 220 connects to a SIM 1 card 152 and OSIM 2 connector connects to SIM 2 card 156. The ESIM interface 222 includes an ESIM connector 228 that connects to an external card reader 153. In addition to the external card reader, "contactless" smart card reader and/or a magnetic stripe card reader can connect to the CPU 202, as described in the co-pending patent applications entitled "Mobile Device Equipped with a Contactless Smart Card Reader", and "Mobile Communication Device Equipped with a Magnetic Stripe Reader", respectively, the entire contents of which are incorporated herein by reference. The memory 216 and memory control logic 214 function so as to provide a Virtual SIM (VSIM) interface that allows data communication between the phone and the SIM card within the VSIM interface and manages the communication between the phone and applications within the VSIM interface and/or applications stored in any of the other cards that are in connection with the VSIM interface.

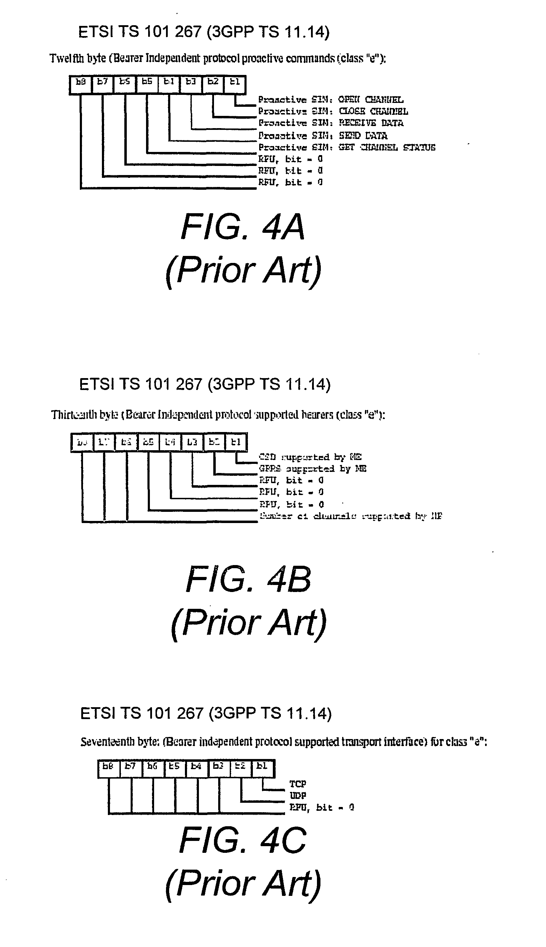

As was mentioned above, the mobile transaction client application 125 utilizes the Bearer Independent Protocol (BIP) to open a communication channel to the mobile device 110 and to transmit and receive data to server 140. The BIP is a signaling protocol specified by the European Telecommunications Standards Institute (ETSI) in a document entitled "ETSI TS 101 267 (3GPP TS 11.14)". To initiate a mobile transaction, the mobile transaction client application 125 queries the profile of the mobile device 110 to obtain information on support for BIP commands, available BIP channels and available BIP transport interfaces. FIG. 4A, FIG. 4B, and FIG. 4C depict the BIP proactive commands, supported bearers, and supported transport interfaces, respectively. The BIP proactive commands include OPEN CHANNEL, CLOSE CHANNEL, RECEIVE DATA, SEND DATA, and GET CHANNEL STATUS. The supported bearers include Circuit Switched Data (CSD) and GPRS. The supported transport interfaces include Transmission Control protocol (TCP), User Datagram Protocol (UDP), and Reserved for Future Use (RFU). The mobile transaction client application 125 opens the appropriate channel using the appropriate transport interface and transmits data to a mobile transaction server application 141 residing within the server 140. The initiation of a mobile transaction can be triggered by user selection on the mobile device 110, by an event occurring on a mobile transaction server application 141 or automatically by an event occurring on a mobile transaction client application 125. The server 140 also connects to other servers 150 via the second network 80 and the mobile transaction server application141 transmits data to the additional servers 150.

In one example, the first network 90 is a wireless telecommunication network such GSM, GPRS, 3G, EDGE, CDMA, TDMA, WCDMA, Mobitex, or DataTac. In other examples first network 90 is a wireless local area network (WLAN) (i.e., 802.11x), a wireless personal area network (WPAN), a wired telecommunications network, a local area network (LAN), a personal area network (PAN) (i.e., Bluetooth, Infrared), or a direct serial line connection to server 140. In one example, the second network 80 is the Internet. In other examples, the second network 80 is a wired or a wireless telecommunication network, a local area network (LAN), a wireless wide area network (WWAN), a wireless local area network (WLAN), or a personal area network (PAN). Mobile Operator Gateway 130 is a routing server utilized by the mobile operator to connect the mobile operator's private network to the public Internet, thereby enabling the mobile device110 to access nodes, servers and /or resources on the Internet.

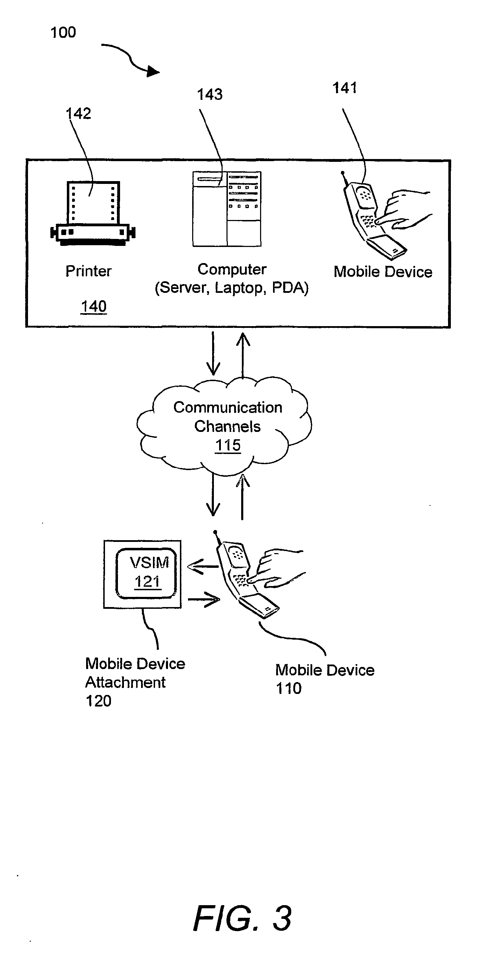

Referring to FIG. 3, in other embodiments, the remote server 140 is another type of remote or local device such as a printer 142, a personal computer 143 or another mobile phone 141. In these embodiments the mobile device 110 supports the appropriate channels 115 to establish a connection with these types of remote or local devices. Examples of appropriate communication channels 115 include Infrared, Bluetooth, direct serial line connection, WLAN, LAN, GPRS, and PAN. In one example, the mobile transaction system 100 utilizes the Infrared, Bluetooth or serial connection of the mobile device 110 to send data to a printer 142 to print out a sales receipt. In another example the mobile transaction system 100 utilizes the Infrared, Bluetooth or serial connections of the mobile device 110 to connect to a server 140 and/or 150. In another example the mobile transaction system 100 utilizes the Infrared, Bluetooth or serial connections of the mobile device 110 to connect to an additional mobile devices 141 for data exchange.

In one embodiment, the mobile transaction system 100 is used for processing mobile payments, such as credit card transactions through the mobile device 110. In this embodiment the server 140 is a payment transaction server and the other servers 150 are payment processors and/or a payment gateway. In another embodiment, the mobile transaction system 100 is utilized for downloading "digital goods" from servers 140, 150 to mobile device 110 and/or to mobile device attachment 120 and to payment cards or smart cards that can connect to the mobile device 110 or the mobile device attachment 120. Examples of "digital goods" include electronic cash (e-Cash), electronic tickets (e-Tickets), electronic coupons (e-Coupons), loyalty points (i.e. frequent flyer miles, frequent shopper points), credits for pre-paid mobile airtime, credits for pre-paid utilities, and digital rights management (DRM) certificates for accessing multi-media applications from servers 140,150 to mobile device 110 and/or to the mobile device attachment 120 and payment card and/or smart card (not shown) in connection with mobile device 110 and/or mobile device attachment 120. This application is described in a co-pending patent application entitled "System And Method For Mobile Payment And Fulfillment Of Digital Goods", the entire content of which is incorporated herein by reference.

Several embodiments of the present invention have been described. Nevertheless, it will be understood that various modifications may be made without departing from the scope of the invention. Accordingly, other embodiments are within the scope of the following claims.

## Claims

1. A system (100) for performing mobile transactions comprising:
a mobile communication device (110) comprising a subscriber identification module, SIM, card slot (111) and a virtual subscriber identification, VSIM, interface (121) connected to said SIM card slot (111);
a server device (140); and
wherein said mobile communication device (110) is **characterized by** comprising means to connect to said server device(140) via a first network (90), means to provide subscriber identity authentication to said server device (140) via said VSIM interface (121), and means to communicate with said server device (140) utilizing SIM Application Toolkit commands to invoke the Bearer Independent Protocol described in the European Telecommunications Standards Institute document ETSI TS 101 267 ,V8.12.0, 3GPP TS 11.14.

2. The system of claim 1 wherein said mobile communication device (110) further comprises a mobile transaction client application (125) for managing said communications between said mobile communication device (110) and said server device (140).

3. The system of claim 1 wherein said server device (140) further comprises a mobile transaction server application (141) for managing communication between said server (140) and said mobile communication device (110).

4. The system of claim 1 wherein said VSIM interface (121) is located within said mobile communication device (110).

5. The system of claim 1 wherein said VSIM interface (121) is located within an attachment device (120) and said attachment device(120) is connected to said SIM card slot (111) of said mobile communication device (110).

6. The system of claim 5 wherein said attachment device (120) further comprises one or more additional SIM slots (122, 123), a second SIM card (126) connected to one of said one or more additional SIM slots and a card reader (124).

7. The system of claim 1 wherein said mobile communications device (110) is selected from a group consisting of a mobile phone, a personal digital assistant, a pager, a wireless laptop computer, a personal computer, a television remote control and combinations thereof.

8. The system of claim 1 wherein said first network (90) comprises a wireless network selected from a group consisting of wireless telecommunications network, a wireless wide area network, WWAN, a wireless local area network, WLAN, a wireless private network, and a wireless personal area network PAN.

9. The system of claim 8 wherein said wireless telecommunications network is selected from a group consisting of a Global System for Mobile Communications, GSM, a Code Division Multiple Access, CDMA, CDMA 2000, wideband CDMA, WCDMA, TDMA, General Packet Radio Service ,GPRS, 3G, EDGE, Mobitex and DataTac.

10. The system of claim 1 wherein said first network (90) is selected from a group consisting of infrared, serial line and Bluetooth.

11. The system of claim 1 wherein said first network (90) is adapted to connect to a second network (80) through a mobile operator gate (130) and wherein said server(140) is adapted to connect to said second network (80) thereby connecting to said first network (90) and said mobile communication device (110).

12. The system of claim 11 wherein said second network (80) is selected from a group consisting of the Internet, a wireless network, a wired network, a telecommunications network, a local area network, LAN, a WWAN, WLAN, and a personal area network, PAN.

13. The system of claim 1 wherein said communication comprises a format selected from a group consisting of Short Message Service (SMS), Transmission Control Protocol/Internet Protocol, TCP/IP, User Datagram Protocol, UPD, Simple Mail Transmission Protocol, SMTP, Simple Network Management Protocol, SNMP, and a proprietary message format.

14. The system of claim 1 wherein said server device (140) is further connected to other server devices (150) via said second network (80).

15. The system of claim 1 wherein said mobile transactions are selected from a group consisting of financial transactions, information exchange transactions and digital goods exchange transactions.

16. The system of claim 1 wherein said server device (140) is selected from a group consisting of a server computer, a personal computer, a second mobile communication device, a printer, and another communication device.

17. The system of claim 2 wherein said mobile communication device (110) further comprises:
a memory (216);
a Central Processing Unit, CPU, (202); and
a first SIM card (99) connected to said SIM card slot (111), said first SIM card (99) authenticating said mobile communication device (110) to said first network (90).

18. The system of claim 17 wherein said mobile communications device (110) further comprises other interfaces connected to said CPU.

19. The system of claim 18 wherein said other interfaces are selected from a group consisting of smart card interfaces, infrared transceiver interfaces, serial communication interfaces, and magnetic stripe reader interfaces.

20. The system of claim 17 wherein said mobile transaction client application (125) is stored in storage selected from a group consisting of said VSIM interface, said CPU, an additional SIM card, an external SIM card, a contactless smart card, and an external card.

21. A method for performing mobile transactions between:
a mobile communication device (110) comprising a subscriber identification module, SIM, card slot (111) and a virtual subscriber identification , VSIM, interface (121) connected to said SIM card slot (111);
and a server device (140);
**characterised by**:
connecting said mobile communication device (110) to said server device (140) via a first network (90);
providing subscriber identity authentication of said mobile communication device (110) to said server device (140) via said VSIM interface (121); and
communicating between said mobile communication device (110) and said server device (140), wherein said mobile communication device (110) manages said communication utilizing SIM Application Toolkit commands to invoke the Bearer Independent Protocol described in the European Telecommunications Standards Institute document ETSI TS 101 267, V8.12.0, 3GPP TS 11.14.

## Patentansprüche

1. Ein System (100) für das Durchführen eines mobilen Vorgangs mit:
einem Mobilfunk-Gerät (110) bestehend aus einem Modul zur Teilnehmeridentifizierung, SIM, einer Kartensteckplätze (111) und einer Schnittstelle zur virtuellen Teilnehmeridentifizierung, VSIM, (121), die mit dem SIM Kartensteckplatz verbunden ist;
einer Bedienervorrichtung (140); und
wobei das Mobilfunk-Gerät (110) **gekennzeichnet ist durch** eine Einrichtung zum Verbinden mit dem Server-Gerät (140) über ein erstes Netzwerk (90), eine Einrichtung zur Teilnehmeridentitätsauthentifizierung gegenüber dem Server-Gerät (140) über die Schnittstelle zur VSIM (121), und eine Einrichtung zum Kommunizieren mit dem Server-Gerät (140) unter Nutzung der SIM-Anwendungstoolkitbefehle zu kommunizieren, um das Bearer Independent Protocol aufzurufen, das im Dokument des Europäischen Telekommunikationsstandardisierungsinstituts ETSI TS 101 267, V 8.12.0, 3GPP TS 11.14 beschrieben ist.

2. Das System nach Anspruch 1, **dadurch gekennzeichnet, dass** das Mobilfunk-Gerät (110) des weiteren beinhaltet eine mobilen Transaktionsclientanwendung (125) für die Verwaltung der Kommunikation zwischen dem Mobilfunk-Gerät (110) und dem Server-Gerät (140).

3. Das System nach Anspruch 1, **dadurch gekennzeichnet, dass** das Server-Gerät (140) ferner eine mobile Transaktionsserveranwendung (141) für die Verwaltung der Kommunikation zwischen dem Server (141) und dem Mobilfunkgerät (110) umfasst.

4. Das System nach Anspruch 1, **dadurch gekennzeichnet, dass** sich die Schnittstelle zur VSIM (121) in dem Mobilfunk-Gerät (110) befindet.

5. Das System nach Anspruch 1, **dadurch gekennzeichnet, dass** die Schnittstelle zur VSIM (121) sich in einer Befestigungsvorrichtung (120) befindet und die Befestigungsvorrichtung (120) an dem SIM Kartensteckplatz (111) des Mobilfunk-Gerät (110) angeschlossen ist.

6. Das System nach Anspruch 5, **dadurch gekennzeichnet, dass** die Befestigungsvorrichtung (120) ferner eine oder mehrer zusätzliche SIM Steckplätze (122, 123), eine zweite SIM-Karte (126), die mit dem einen oder mehreren zusätzlichen SIM-Schlitzen verbunden ist und einen Kartenleser (124) umfasst.

7. Das System nach Anspruch 1, **dadurch gekennzeichnet, dass** das Mobilfunk-Gerät (110) aus einer Gruppe ausgewählt wird, die aus einem Mobiltelefon, einem persönlichen digitalen Assistenten, einen Pager, einem drahtlosen Laptop-Computer, einem PC, einer Fernseherfernbedienung und Kombinationen davon besteht.

8. Das System nach Anspruch 1, **dadurch gekennzeichnet, dass** das erste Netz (90) ein drahtloses Netz enthält, das aus einer Gruppe ausgewählt wird, die ein drahtloses Fernmeldenetz, ein drahtloses Fernnetz WWAN, einem drahtlosen Inhausnetz, WLAN, einem drahtlosen privaten Netz und aus einem drahtlosen persönlichen Bereichsnetz PAN besteht.

9. Das System nach Anspruch 8, **dadurch gekennzeichnet, dass** das drahtlose Fernmeldenetz aus einer Gruppe ausgewählt wird, die aus einem globalen System für bewegliche Kommunikationen, GSM, einem Code-Teilungs-Mehrfach-Zugang, CDMA, CDMA 2000, Breitband-CDMA (WCDMA), TDMA, einem allgemeinen Paket-Funk-Service (GPRS), 3G, RAND, Mobitex und DataTac besteht.

10. Das System nach Anspruch 1, **dadurch gekennzeichnet, dass** erstes Netz (90) aus einer Gruppe ausgewählt wird, die aus Infrarot, einem seriellen Kabel Serienlinie und Bluetooth besteht.

11. Das System nach Anspruch 1, **dadurch gekennzeichnet, dass** das erste Netz (90) angepasst ist, um an ein zweites Netz (80) durch ein mobiles Betreibertor (130) anzuschließen und wobei der Server (140) angepasst ist, um an das zweite Netz (80) anzuschließen, wobei er dadurch das erste Netz (90) und das Mobilfunk-Gerät (110) verbindet.

12. Das System nach Anspruch 11, **dadurch gekennzeichnet, dass** das zweite Netz (80) aus einer Gruppe ausgewählt wird, die aus dem Internet, einem drahtlosen Netz, einem drahtgebundenen Netz, einem Fernmeldenetz, einem Inhausnetz, LAN, einem WWAN, WLAN und aus einem persönlichen Bereichsnetz, PAN besteht.

13. Das System nach Anspruch 1, **dadurch gekennzeichnet, dass** die Kommunikation ein Format enthält, das aus einer Gruppe ausgewählt wird, die aus einem Kurzmitteilungsdienst (SMS), einem Übertragungssteuerprotokoll/Internet-Protokoll, TCP/IP, einem Benutzerdatagramprotokoll, UPD, einem einfachen Mail-Übertragungs-Protokoll, STMP, einem einfachen Netzwerk-Management-Protokoll, SNMP und aus einem proprietären Nachrichtenformat besteht.

14. Das System nach Anspruch 1, **dadurch gekennzeichnet, dass** das Server-Gerät (140) weiter an andere Server-Geräte (150) über das zweite Netz (80) angeschlossen ist.

15. Das System von Anspruch 1, **dadurch gekennzeichnet, dass** die mobilen Transaktionen aus einer Gruppe ausgewählt werden, die aus Geldtransaktionen, Informationsaustauschtransaktionen und aus digitalen Warenaustauschtransaktionen besteht.

16. Das System von Anspruch 1, **dadurch gekennzeichnet, dass** das Server-Gerät (140) aus einer Gruppe ausgewählt wird, die aus einem Servercomputer, einem PC, einem zweiten Mobilfunkgerät, einem Drucker und aus einem anderen Kommunikationsgerät besteht.

17. Das System von Anspruch 2, **dadurch gekennzeichnet, dass** das Mobilfunk-Gerät (110) ferner enthält:
einen Speicher (216);
eine zentrale Verarbeitungseinheit, CPU, (202); und
eine erste SIM-Karten (99), die mit dem SIM-Kartensteckplatz (111) verbunden ist, wobei die erste SIM Karte (99) das Mobilfunk-Gerät (110) gegenüber dem erstem Netz (90) authentifiziert.

18. Das System von Anspruch 17, **dadurch gekennzeichnet, dass** das Mobilfunk-Gerät (110) ferner andere Schnittstellen enthält, die an dem CPU angeschlossen sind.

19. Das System von Anspruch 18, **dadurch gekennzeichnet, dass** die andere Schnittstellen aus einer Gruppe ausgewählt werden, die aus Schnittstellen für Smartcards, Infrarotsender- und -empfängerschnittstellen, serielle Kommunikationsschnittstellen und Magnetsstreifenleserschnittstellen besteht.

20. Das System von Anspruch 17, **dadurch gekennzeichnet, dass** die mobile Transaktionsclientanwendung (125), die im Speicher gespeichert wird, aus einer Gruppe bestehend aus der Schnittstelle zur VSIM, der CPU, einer zusätzlichen SIM-Karte, einer externen SIM-Karte, einer kontaktlosen Smartcard und einer externen Karte ausgewählt wird.

21. Ein Verfahren zum Durchführen mobiler Transaktionen zwischen:
einem Mobilfunk-Gerät (110) mit einem Teilnehmeridentifizierungsmodul, SIM, einem Kartensteckplatz (111) und einer Schnittstelle zur virtuellen Teilnehmeridentifizierung, VSIM (121), die mit dem SIM Kartensteckplatz (111) verbunden ist;
einem Server-Gerät (140);
**gekennzeichnet durch**:
Verbinden des Mobilfunk-Geräts (110) mit dem Server-Gerät (140) über ein erstes Netzwerk (90);
zur Verfügung stellen von Teilnehmeridentitätsauthentisierung des Mobilfunk-Geräts (110) gegenüber dem Server-Gerät (140) über die Schnittstelle zur VSIM (121); und
Kommunizieren zwischen dem Mobilfunk-Gerät (110) und dem Server-Gerät (140), wobei das Mobilfunk-Gerät (110) die Kommunikation unter Nutzung der SIM-Anwendungstoolkitbefehle managt, um das Bearer Independent Protocol aufzurufen, das im Dokument des Europäischen Telekommunikationsstandardisierungsinstituts ETSI TS 101 267, V 8.12.0, 3GPP TS 11.14 beschrieben ist.

## Revendications

1. Un système (100) pour exécuter la comportement mobile de transactions:
un dispositif mobile de communication (110) comportant un logement (111) pour carte du module d'identification d'abonné, SIM, et une interface virtuelle de l'identification d'abonné (121), VSIM, s'est relié à ledit logement pour carte de SIM (111);
un dispositif de serveur (140); et
où ledit dispositif mobile de communication (110) est caractérisé en un moyen pour se relier à ledit dispositif de serveur (140) par l'intermédiaire d'un premier réseau (90), fournit l'authentification d'identité d'abonné à ledit dispositif de serveur (140) par l'intermédiaire de ledit VSIM (121), et contrôle la communication avec ledit dispositif de serveur (140) utilisant des commandes de trousse à outils d'application de SIM d'appeler le protocole indépendant de porteur décrit dans le document d'institut de normes de télécommunications ETSI TS 101 267, V8.12.0, 3GPP TS 11.14.

2. Le système de la revendication 1 où ledit dispositif mobile de communication (125) autre comporte une demande mobile de client de transaction de ladite communication de gestion entre ledit dispositif mobile de communication (110) et ledit dispositif de serveur (140).

3. Le système de la revendication 1 où ledit dispositif de serveur (140) autre comporte une demande mobile de serveur de transaction de communication de gestion (141) entre ledit serveur (140) et ledit dispositif mobile de communication (110).

4. Le système de la revendication 1 où ladite interface de VSIM (121) est située dans ledit dispositif mobile de communication (110).

5. Le système de la revendication 1 où ladite interface de VSIM (121) est située dans un dispositif d'attachement (120) et le dispositif d'attachement (120) est relié à ledit logement pour carte de SIM (111) de ledit dispositif mobile de communication (110).

6. Le système de la revendication 5 où ledit dispositif d'attachement (120) autre comporte une ou plusieurs fentes additionnelles de SIM (122, 123), une deuxième carte de SIM (126) a relié à une de dite une ou plusieurs fentes additionnelles de SIM et un lecteur de cartes (124).

7. Le système de la revendication 1 où ledit dispositif mobile de communications (110) est choisi parmi un groupe se composant d'un téléphone portable, un aide numérique personnel, un pagineur, a ordinateur portable sans fil, un PC, une télécommande de télévision et combinaisons en.

8. Le système de la revendication 1 où ledit premier réseau (90) comporte un réseau sans fil choisi parmi un groupe se composant du réseau de télécommunications sans fil, d'un réseau étendu sans fil, WWAN, d'un réseau local sans fil, WLAN, d'un réseau privé sans fil, et d'un réseau personnel sans fil de secteur, PAN.

9. Le système de la revendication 8 où ledit réseau de télécommunications sans fil est choisi parmi un groupe se composant d'un système global pour les communications mobiles, GSM, un Access multiple de division des codes, CDMA, CDMA 2000, CDMA à large bande, WCDMA, TDMA, service général de radio de paquet, GPRS, 3G, EDGE, Mobitex et DataTac.

10. Le système de la revendication 1 où ledit premier réseau (90) est choisi parmi un groupe se composant de la ligne infrarouge et périodique et du Bluetooth.

11. Le système de la revendication 1 où ledit premier réseau (90) est adapté pour se relier à un deuxième réseau (80) par une porte mobile d'opérateur (130) et où ledit serveur (140) est adapté pour se relier à ledit deuxième réseau (80) se reliant de ce fait à ledit premier réseau (90) et à ledit dispositif mobile de communication (110).

12. Le système de la revendication 11 où ledit deuxième réseau (80) est choisi parmi un groupe comprenant l'Internet, un réseau sans fil, un réseau de câble, un réseau de télécommunications, un réseau local, LAN, un WWAN, WLAN, et un réseau personnel de secteur, PAN.

13. Le système de la revendication 1 où ladite communication comporte un format choisi parmi un groupe se composant du service de message court (SMS), du Transmission Control Protocol/de Internet Protocol, TCP/IP, de l'User Datagram Protocol, UPD, du protocole simple de transmission de courrier SMPT, du Simple Network Management Protocol, SNMP, et d'un format de propriété industrielle de message.

14. Le système de la revendication 1 où ledit dispositif de serveur (140) est encore relié à d'autres dispositifs de serveur (150) par l'intermédiaire de ledit deuxième réseau (80).

15. Le système de la revendication 1 où lesdites transactions mobiles sont choisies parmi un groupe se composant des transactions financières, des transactions d'échange de l'information et des transactions d'échange numériques de marchandises.

16. Le système de la revendication 1 où ledit dispositif de serveur (140) est choisi parmi un groupe se composant d'un ordinateur serveur, d'un micro-ordinateur, d'un deuxième dispositif mobile de communication, d'un imprimeur, et d'un dispositif différent de communication.

17. Le système de la revendication 2 où ledit dispositif mobile de communication (110) autre comporte:
une mémoire (216);
une unité centrale de traitement (unité centrale de traitement) (202); et
une première carte de SIM (99) s'est reliée à ledit logement pour carte de SIM (111), dispositif mobile de authentification de communication de la première carte de SIM (110) ledit à ledit premier réseau (90).

18. Le système de la revendication 17 où ledit dispositif mobile de communications (110) autre comporte d'autres interfaces reliées à ladite unité centrale de traitement.

19. Le système de la revendication 18 où dit d'autres interfaces sont choisies parmi un groupe se composant des interfaces futées de carte, l'émetteur récepteur infrarouge connecte, les interfaces de communication périodiques, et les interfaces magnétiques de lecteur de raie.

20. Le système de la revendication 17 où ladite application mobile de client de transaction (125) est stockée dans le stockage choisi parmi interface se composante du groupe ladite VSIM, a indiqué l'unité centrale de traitement, une carte additionnelle de SIM, une carte externe de SIM, une carte futée sans contact, et une carte externe.

21. Une méthode pour exécuter la comportement mobile de transactions entre:
un dispositif mobile de communication (110) comportant un logement pour carte de module d'identification d'abonné, SIM, (111) et une interface virtuelle de l'identification d'abonné (VSIM) (121) s'est relié à ledit logement pour carte de SIM (111);
et un dispositif de serveur (140);
**caractérisé par**:
ledit dispositif mobile se reliant de communication (110) à ledit dispositif de serveur (110) par l'intermédiaire d'un premier réseau (90);
en fournissant l'authentification d'identité d'abonné de ledit dispositif mobile de communication (110) à ledit dispositif de serveur (140) par l'intermédiaire de ledit VSIM connectez (121); et
communiquant entre ledit dispositif mobile de communication et ledit dispositif de serveur (110), où ledit dispositif mobile de communication (110) contrôle ladite communication utilisant des commandes de trousse à outils d'application de SIM d'appeler le protocole indépendant de porteur décrit dans le document d'institut de normes de télécommunications ETSI TS 101 267 V8.12.0, 3GPP TS 11.14.
